# EUROPÄISCHE PATENTSCHRIFT

(11) **EP 3 520 878 B1**
(45) Veröffentlichungstag und Bekanntmachung des Hinweises auf die Patenterteilung: **04.11.2020**
(21) Anmeldenummer: 18154621.9
(22) Anmeldetag: 01.02.2018
(51) Int. Cl.: B01D 46/00, B01D 46/10, B01D 46/12

(54) **FILTERELEMENT UND VERWENDUNG EINES SOLCHEN FILTERELEMENTS**
FILTER ELEMENT AND USE OF SUCH A FILTER ELEMENT
ÉLÉMENT FILTRANT ET UTILISATION D'UN TEL ÉLÉMENT FILTRANT

(43) Veröffentlichungstag der Anmeldung: 07.08.2019
(73) Patentinhaber: Carl Freudenberg KG, 69469 Weinheim (DE)
(72) Erfinder: Sieh, Maik, 69207 Sandhausen (DE); Papa, Sergio, 10141 Turin (IT); Menzio, Giacomo, 10139 Turin (IT); Aureli, Ilaria, 20017 Rho - fraz. Mazzo MI (IT); Ricuperati, Luca, 20017 Rho - fraz. Mazzo MI (IT); Strozzi, Domenico, 20017 Rho - fraz. Mazzo MI (IT); Beisel, Marcel, 64760 Oberzent (DE)

(56) Entgegenhaltungen:
- EP-A1- 0 334 719
- DE-A1- 19 840 146
- DE-U1- 20 101 237
- JP-A- 2003 088 718
- US-B1- 6 406 509

## Beschreibung

Die Erfindung betrifft ein Filterelement zum Filtern gemäß dem Oberbegriff von Anspruch 1 sowie die Verwendung eines Filterelements gemäß Anspruch 12.

### Stand der Technik

Aus dem Stand der Technik sind unterschiedlichste Filterelemente zum Filtern von Innenraumluft bekannt. In der DE 10 2013 011 457 A1 wird ein Innenraumluftfilterlement für die Fahrerkabine von Land- und Arbeitsmaschinen, insbesondere mit Spritz- oder Sprühvorrichtungen für Pflanzenschutz- oder Düngemittel beschrieben. Das Innenraumluftfilterelement umfasst eine Adsorptionsfilterlage mit Aktivkohle, eine Feinfilterlage, insbesondere zur Abscheidung von Aerosolen und eine umlaufende Dichtung zur Trennung der Rohseite von der Reinseite beim Einbau in ein Filtergehäuse. Das Innenraumluftfilterelement besitzt einen spritzgegossenen Kunststoffrahmen, welcher entweder vorgefertigt sein kann und die Teilfilterelemente in sich aufnimmt, die im Rahmen verklebt oder verschweißt werden. Alternativ kann der Rahmen als umspitzter Rahmen ausgebildet sein, der dadurch gebildet wird, dass die Teilfilterelemente in eine Form eingelegt und anschließend mit einem Spritzgußrahmen umspritzt werden, wobei das Material sich beim Aushärten unlösbar mit den Teilfilterelementen verbindet. Nachteilig bei einem derartigen Filterelement ist der hohe Aufwand und sind die hohen Kosten bei der Fertigung des spritzgegossenen Rahmens. Für jede Rahmengröße und jede Rahmenform müssen spezielle Spritzgußformen vorgehalten werden, welche teuer in der Herstellung sind. Eine kurzfristige Anpassung der Form des Rahmens und damit des Filterelements sowie die Herstellung von Filterelementen in kleinen Chargen sind dabei wirtschaftlich nicht möglich.

Die US 6,406,509 B1, JP 2003 088718 A und DE 201 01 237 U1 zeigen jeweils einen Rahmen für eine plissierte Filterlage. Der Rahmen wird dabei jeweils aus extrudierten Profilleisten zusammengesetzt. Zur besseren Abdichtung kann die Filterlage in den Rahmen eingeklebt werden.

### Aufgabenstellung

Aufgabe der vorliegenden Erfindung ist es, ein Filterelement zum Filtern von Innenraumluft zu schaffen, welches die Nachteile des Standes der Technik zumindest reduziert, einen einfachen Aufbau aufweist sowie einen einfachen Einbau in ein Gehäuse ermöglicht. Weitere Aufgabe ist es, das Filterelement auch in kleinen Chargen in unterschiedlichsten Größen herstellen zu können.

### Technische Lösung

Gelöst wird diese Aufgabe durch ein Filterelement mit den Merkmalen von Anspruch 1.

Das erfindungsgemäße Filterelement dient dem Filtern und Reinigen von Innenraumluft und besitzt mindestens drei Filterlagen, wobei die Filterlagen in einem Rahmen angeordnet sind. Für jede Filterlage ist dabei in dem Rahmen ein Bereich vorgesehen. In vorteilhafter Weise ist der Rahmen aus extrudierten Profilleisten zusammengesetzt. Der Rahmen ist also nicht spritzgegossen. Dies hat den Vorteil, dass so kostengünstig und schnell kundenindividuell mechanisch stabile Filterelemente unterschiedlicher Größe gefertigt werden können. Entsprechend den Abmaßen des Rahmens werden die Profilleisten abgelängt und aneinander gesetzt. Weil die zwei, drei oder mehr Filterlagen in dem einen Filterelement vereint sind, muss bei dessen Montage keine Abdichtung zwischen den Filterlagen zusätzlich eingebaut werden. Dadurch wird eine schnelle und einfache Montage des Filterelements in einem Gehäuse ermöglicht.

Die Profilleisten können dabei insbesondere aus Kunststoff, insbesondere aus ABS, PP oder PA, oder Aluminium gefertigt sein. Diese Materialien verbinden eine gute Extrudierbarkeit mit einem geringen Gewicht und gleichzeitig hoher Stabilität.

Beim erfindungsgemäßen Filterelement ist die erste Filterlage als Vorfilter, die zweite Filterlage als Feinfilter, welcher auch als Aerosolfilter bezeichnet werden kann, und die dritte Filterlage als Adsorptionsfilter ausgebildet. Der Vorfilter und der Feinfilter können zum Beispiel als plissiertes Faltenpaket, auch als Faltenpack bezeichnet, aus organischem und/oder anorganischem Vliesstoff und der Adsorptionsfilter zum Beispiel als Filterkörper aus Aktivkohle oder mit einer Aktivkohlebeschichtung ausgeführt sein.

Als besonders vorteilhaft wurde erkannt, den Feinfilter als HEPA-Filter, d. h. als High-Efficieny-Pariculate-Air-Filter auszuführen.

In erfindungsgemäßer Ausführung des Filterelements weist jede Profilleiste zwischen zweiter und dritter Filterlage, also z.B. zwischen Feinfilter und Adsorptionsfilter einen nach Innen hervorstehenden Absatz auf zur luftdichten Trennung der zweiten von der dritten Filterlage im Bereich des Rahmens.

Es wurde als vorteilhaft erkannt, mindestens die zweiter Filterlage, also z.B. den Feinfilter in den Rahmen leckfrei einzukleben. Es können auch weitere Filterlagen leckfrei in den Rahmen eingeklebt sein. In besonders vorteilhafter Weiterbildung weist jede Profilleiste im Bereich der zweiten Filterlage, also z.B. des Feinfilters mindestens einen gegenüber der Oberfläche der Profilleiste erhabenen, nach Innen gerichteten Steg auf, insbesondere von geringer Höhe, zum Aufnehmen von Klebstoff zwischen der zweiten Filterlage und der Profilleiste. Dank der Stege kann der Klebstoff die zweite Filterlage gut unterströmen, was ein sicheres und gemäß EN1822 leckfreies Verkleben der zweiten Filterlage erlaubt und Bypässe im Bereich des Feinfilters vermeidet.

In vorteilhafter Weiterbildung des erfindungsgemäßen Filterelements weist jede von deren Profilleisten einen, gegebenenfalls weiteren, nach Außen hervorstehenden Absatz auf, wobei diese Absätze zusammen einen umlaufenden Flansch des Filterelements ausbilden. Der Flansch kann dabei einer definierten Montage des Filterelements in einem Gehäuse dienen. Als besonders vorteilhaft und daher bevorzugt wird es angesehen, wenn an dem Flansch eine, zum Beispiel nahtlos eingeschäumte und komplett um den Rahmen umlaufende Dichtung angebracht ist, zum Abdichten des Filterelements gegenüber einem Gehäuse, in welches das Filterelement eingesetzt wird. Ein solches Filterelement kann einfach und fehlerfrei montiert werden und es wird gleichzeitig sichergestellt, dass die zu filternde Luft von der Umgebung, d. h. der Rohgasseite, zum Innenraum, d. h. der Reingasseite, alle drei Filterlagen durchströmt und dabei gefiltert und gereinigt wird.

In einer möglichen Ausgestaltung des Filterelements besitzt der Flansch einen Abstandshalter, zum Beispiel eine hervorstehende Nase oder einen erhabenen Steg, zur Begrenzung der maximalen Dichtungskompression im montierten Zustand. Der Abstandshalter ist auf der gleichen Seite wie auch die Dichtung am flansch angeordnet. Eine Zerstörung der Dichtung kann durch zu hohe Kompression so verhindert werden und die Funktionsfähigkeit der Dichtung wird sichergestellt. In einer möglichen vorteilhaften Ausführungsform des Filterelements sind die Profilleisten mit in die Profilleisten einsteckbaren Eckverbindern zu dem Rahmen verbunden. Dadurch kann der Rahmen in einfacher Weise ohne Verschweißen, Verschrauben oder Vernieten sicher und stabil zusammengesetzt werden.

Die Erfindung betrifft auch die Verwendung eines wie obenstehend beschriebenen Filterelements als Innenraumluftfilterelement zur Filtration und Reinigung der Kabinenzuluft in einem Fahrzeug, welches einer erhöhten Schadstoffbelastung unterliegt, insbesondere in einem Nutzfahrzeug, einem Schwerlastfahrzeug oder einem Offroadfahrzeug. Bei den Fahrzeugen kann es sich beispielsweise handeln um Lastwagen, Baumaschinen, Walzen, Raupenfahrzeuge, Straßenfräsen, Planierraupen, Laderaupen, Bagger, Krähne, Erntemaschienen, Landmaschinen, Mähdrescher, Häcksler, Traktoren, selbstfahrende Feldspritzen oder Forstfahrzeuge.

Die beschriebene Erfindung und die beschriebenen vorteilhaften Weiterbildungen der Erfindung stellen auch in Kombination miteinander - soweit es technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Figur 1: den Aufbau eines erfindungsgemäßen Filterelements
- Figur 2: das erfindungsgemäße Filterelement aus Figur 1 bei der Montage in ein Gehäuse
- Figur 3: den Schnitt durch eine extrudierte Profilleiste, welche zum Zusammensetzen eines Rahmen des erfindungsgemäßen Filterelements dient

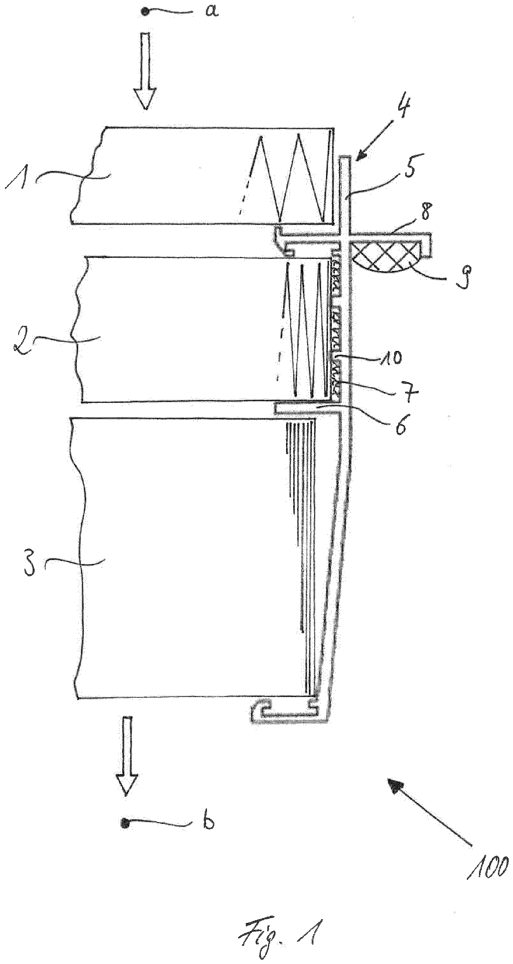

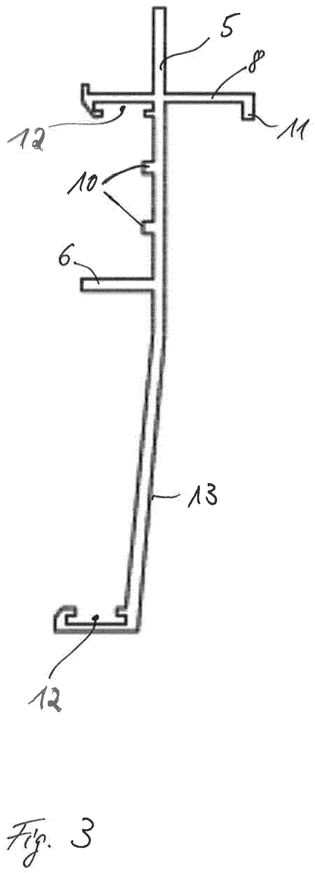

Figur 1 zeigt den Aufbau des Filterelements 100. Das Filterelement 100 besitzt einen Rahmen 4, welcher eine erste Filterlage 1, eine zweite Filterlage 2 sowie eine dritte Filterlage 3 aufnimmt. Luft wird - wie durch die Pfeile dargestellt - von der Umgebung, von einer Rohgasseite a durch die drei Filterlagen 1, 2, 3 hindurch in den Innenraum zu einer Reingasseite b hintransportiert und dabei gefiltert. Die erste Filterlage 1 ist als Vorfilter, die zweite Filterlage 2 als Feinfilter, nämlich als HEPA- Filter und die dritte Filterlage 3 als Adsorptionsfilter mit Aktivkohle ausgebildet. Der Rahmen 4 wird zusammengesetzt aus mehreren extrudierten Profilleisten 5. Zur Herstellung beispielsweise eines quaderförmigen Rahmens 4 werden vier extrudierte Profilleisten 5 jeweils im Winkel von 90° aneinandergesetzt und miteinander zu einem quaderförmigen Rahmen 4 verbunden. Wie in der Querschnittsansicht von Figur 3 dargestellt, besitzt die extrudierte Profilleite 5 Nuten 12, welche zum Einschieben von Eckverbindern dienen. Die Eckverbinder dienen dem Verbinden der einzelnen Profilleisten und können dabei als dünne, winkelförmige Plättchen ausgebildet sein.

Die extrudierten Profilleisten 5 können aus Kunststoff oder aus Aluminium hergestellt sein.

Wie in Figur 1 dargestellt besitzt die extrudierte Profilleiste 5 einen zwischen zweiter Filterlage 2 und dritter Filterlage 3 nach Innen, in das Filterelement 100 hinein, hervorstehenden Absatz 6, welcher zur Trennung der zweiten Filterlage 2 von der dritten Filterlage 3 im Bereich des Rahmens dient. Eine Trennung zwischen erster Filterlage 1 und zweiter Filterlage 2 im Bereich des Rahmens 4 erfolgt durch die obere Randfläche der extrudierten Profilleiste 5. Mindestens die zweite Filterlage 2 ist, wie dargestellt, mittels Klebstoff 7 in den Rahmen 4 leckfrei eingeklebt. Für die Bedeutung von "leckfrei" wird auf die EN1822 verwiesen. Damit sich der Klebstoff 7 im Bereich der Klebefläche gut verteilen kann, d. h. die zweite Filterlage 2 gut mit Klebstoff 7 hinterströmt wird, sind im Bereich der zweiten Filterlage 2 an der extrudierten Profilleiste 5 mehrere erhabene Stege 10 vorgesehen. Diese Stege 10 stehen ebenfalls ins Innere des Filterelements 100 hervor. Zusätzlich besitzt die extrudierte Profilleiste 5 einen nach Außen hervorstehenden Absatz 8. Die Absätze 8 der zusammengesetzen Profilleisten 5 bilden einen umlaufenden Flansch des Filterelements 100 aus. An der Unterseite des Absatzes 8, d. h. an der Unterseite des Flansches, ist eine umlaufende, angeschäumte Dichtung 9 vorgesehen.

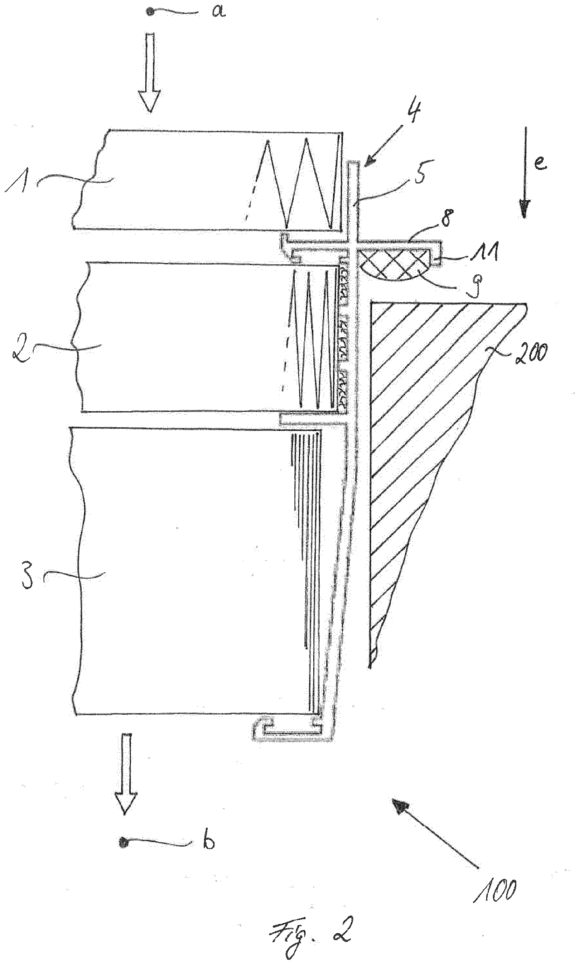

Wird das Filterelement 100, wie in Figur 2 dargestellt, in ein Gehäuse 200 montiert, so wird das Filterelement 100 in einer Einsteckrichtung e in das Gehäuse 200 eingeschoben. Das Filterelement 100 wird dabei soweit in das Gehäuse 200 eingeschoben, bis die Dichtung 9 eine Abdichtung zwischen Gehäuse 200 und Filterelement 100 bewirkt. Um zu verhindern, dass die Dichtung 9 bei der Montage zu stark komprimiert und dabei möglicherweise zerstört wird, ist an dem Absatz 8 mindestens ein Abstandshalter 11 angebracht, welcher die Einschiebebewegung bei der Montage begrenzt und eine maximale Dichtungskompression der Dichtung 9 festlegt.

Um das Filterlement 100 einfacher in ein als Filteraufnahme dienendes Gehäuse 200 in Einsteckrichtung e einschieben zu können (vgl. Fig. 2) besitzt die extrudierte Profilleiste 5 eine Einführschräge 13 (vgl. Fig. 3).

### Bezugszeichenliste

- 1: erste Filterlage
- 2: zweite Filterlage
- 3: dritte Filterlage
- 4: Rahmen
- 5: extrudierte Profilleiste
- 6: Absatz (innen)
- 7: Klebstoff
- 8: Absatz (außen)
- 9: Dichtung
- 10: Steg
- 11: Abstandshalter
- 12: Nut zum Einschieben von Eckverbindern
- 13: Einführschräge

- 100: Filterelement
- 200: Gehäuse

- a: Umgebung (Rohgas)
- b: Innenraum (Reingas)
- e: Einsteckrichtung (Montage)

## Patentansprüche

1. Filterelement (100) zum Filtern von Innenraumluft mit mindestens drei Filterlagen (1, 2, 3), wobei die Filterlagen (1, 2, 3) in einem Rahmen (4) angeordnet sind, und der Rahmen (4) aus extrudierten Profilleisten (5) zusammengesetzt ist, **dadurch gekennzeichnet,**
**dass** die erste Filterlage (1) als Vorfilter, die zweite Filterlage (2) als Feinfilter und die dritte Filterlage (3) als Adsorptionsfilter ausgebildet sind, dass für jede Filterlage (1, 2, 3) in dem Rahmen (4) ein Bereich vorgesehen ist, und dass jede Profilleiste (5) zwischen zweiter Filterlage (2) und dritter Filterlage (3) einen hervorstehenden Absatz (6) aufweist, zur Trennung der zweiten Filterlage (2) von der dritten Filterlage (3) im Bereich des Rahmens (4).

2. Filterelement nach Anspruch 1, **dadurch gekennzeichnet,**
**dass** mindestens die zweite Filterlage (2) leckfrei in den Rahmen (4) geklebt ist.

3. Filterelement nach Anspruch 2, **dadurch gekennzeichnet,**
**dass** jede Profilleiste (5) im Bereich der zweiten Filterlage (2) mindestens einen nach innen gerichteten Steg (10) aufweist.

4. Filterelement nach einem der vorangehenden Ansprüche, **dadurch gekennzeichnet,**
**dass** jede Profilleiste (5) einen nach außen hervorstehenden Absatz (8) aufweist, wobei diese Absätze (8) einen umlaufenden Flansch des Filterelements (100) ausbilden.

5. Filterelement nach Anspruch 4, **dadurch gekennzeichnet,**
**dass** sich der Flansch im Bereich der zweiten Filterlage (2) befindet.

6. Filterelement nach Anspruch 4 oder 5, **dadurch gekennzeichnet,**
**dass** an dem Flansch eine Dichtung (9) angeordnet ist.

7. Filterelement nach Anspruch 6, **dadurch gekennzeichnet,**
**dass** der Flansch (9) einen Abstandshalter (11) besitzt zur Begrenzung der maximalen Dichtungskompression.

8. Filterelement nach einem der vorangehenden Ansprüche, **dadurch gekennzeichnet,**
**dass** die Profilleisten (5) mit in die Profilleisten (5) einsteckbaren Eckverbindern zu dem Rahmen (4) verbunden sind.

9. Filterelement nach einem der Ansprüche 1 bis 7, **dadurch gekennzeichnet,**
**dass** der Feinfilter (2) als HEPA-Filter ausgeführt ist.

10. Filterelement nach einem der vorangehenden Ansprüche, **dadurch gekennzeichnet,**
**dass** die Profilleisten (5) aus Kunststoff oder Aluminium gefertigt sind.

11. Filterelement nach einem der vorangehenden Ansprüche, **dadurch gekennzeichnet,**
**dass** die Profilleisten (5) zur Reingasseite (b) hin eine Einführschräge (13) aufweisen.

12. Verwendung eines Filterelements (100) nach einem der vorangehenden Ansprüche als Innenraumluftfilterelement zur Filtration der Kabinenzuluft in einem Fahrzeug, welches einer erhöhten Schadstoffbelastung unterliegt, insbesondere in einem Nutzfahrzeug, einem Schwerlastfahrzeug oder einem Offroadfahrzeug.

## Claims

1. Filter element (100) for filtering interior compartment air, having at least three filter layers (1, 2, 3), wherein the filter layers (1, 2, 3) are arranged in a frame (4), and the frame (4) is assembled from extruded profiled strips (5), **characterized**
**in that** the first filter layer (1) is formed as a pre-filter, the second filter layer (2) is formed as a fine filter and the third filter layer (3) is formed as an adsorption filter, in that a region is provided in the frame (4) for each filter layer (1, 2, 3), and in that each profiled strip (5) has between the second filter layer (2) and the third filter layer (3) a projecting shoulder (6) for separating the second filter layer (2) from the third filter layer (3) in the region of the frame (4) .

2. Filter element according to Claim 1, **characterized in that** at least the second filter layer (2) is bonded into the frame (4) in a leakage-free manner.

3. Filter element according to Claim 2, **characterized in that** each profiled strip (5) has in the region of the second filter layer (2) at least one inwardly directed web (10).

4. Filter element according to one of the preceding claims, **characterized**
**in that** each profiled strip (5) has an outwardly projecting shoulder (8), wherein these shoulders (8) form a peripheral flange of the filter element (100) .

5. Filter element according to Claim 4, **characterized in that** the flange is situated in the region of the second filter layer (2).

6. Filter element according to Claim 4 or 5, **characterized in that** a seal (9) is arranged on the flange.

7. Filter element according to Claim 6, **characterized in that** the flange (9) has a spacer (11) for limiting the maximum seal compression.

8. Filter element according to one of the preceding claims, **characterized**
**in that** the profiled strips (5) are connected to corner connectors, which are able to be plugged into the profiled strips (5), to form the frame (4).

9. Filter element according to one of Claims 1 to 7, **characterized**
**in that** the fine filter (2) is designed as a HEPA filter.

10. Filter element according to one of the preceding claims, **characterized**
**in that** the profiled strips (5) are manufactured from plastic or aluminium.

11. Filter element according to one of the preceding claims, **characterized**
**in that** the profiled strips (5) have towards the clean gas side (b) an insertion bevel (13).

12. Use of a filter element (100) according to one of the preceding claims as an interior compartment air filter element for filtration of the cabin supply air in a vehicle which is subject to increased pollutant loading, in particular in a utility vehicle, a heavy-duty vehicle or an off-road vehicle.

## Revendications

1. Élément filtrant (100) pour la filtration d'air intérieur, comprenant au moins trois couches de filtre (1, 2, 3), les couches de filtre (1, 2, 3) étant agencées dans un cadre (4), et le cadre (4) étant composé par des baguettes profilées extrudées (5), **caractérisé**
**en ce que** la première couche de filtre (1) est configurée sous la forme d'un filtre préliminaire, la deuxième couche de filtre (2) sous la forme d'un filtre fin et la troisième couche de filtre (3) sous la forme d'un filtre d'adsorption,
**en ce qu'**une zone est prévue pour chaque couche de filtre (1, 2, 3) dans le cadre (4), et **en ce que** chaque baguette profilée (5) présente un épaulement protubérant (6) entre la deuxième couche de filtre (2) et la troisième couche de filtre (3), pour la séparation de la deuxième couche de filtre (2) de la troisième couche de filtre (3) dans la zone du cadre (4) .

2. Élément filtrant selon la revendication 1, **caractérisé en ce qu'**au moins la deuxième couche de filtre (2) est collée sans fuite dans le cadre (4).

3. Élément filtrant selon la revendication 2, **caractérisé en ce que** chaque baguette profilée (5) comprend au moins une traverse orientée vers l'intérieur (10) dans la zone de la deuxième couche de filtre (2).

4. Élément filtrant selon l'une quelconque des revendications précédentes, **caractérisé en ce que** chaque baguette profilée (5) comprend un épaulement protubérant vers l'extérieur (8), ces épaulements (8) formant une bride périphérique de l'élément filtrant (100) .

5. Élément filtrant selon la revendication 4, **caractérisé en ce que** la bride se trouve dans la zone de la deuxième couche de filtre (2).

6. Élément filtrant selon la revendication 4 ou 5, **caractérisé en ce qu'**un joint d'étanchéité (9) est agencé au niveau de la bride.

7. Élément filtrant selon la revendication 6, **caractérisé en ce que** la bride (9) comporte un espaceur (11) pour limiter la compression maximale du joint d'étanchéité.

8. Élément filtrant selon l'une quelconque des revendications précédentes, **caractérisé en ce que** les baguettes profilées (5) sont reliées avec des raccords d'angle insérables dans les baguettes profilées (5) pour former le cadre (4).

9. Élément filtrant selon l'une quelconque des revendications 1 à 7, **caractérisé en ce que** le filtre fin (2) est configuré sous la forme d'un filtre HEPA.

10. Élément filtrant selon l'une quelconque des revendications précédentes, **caractérisé en ce que** les baguettes profilées (5) sont fabriquées en matière plastique ou en aluminium.

11. Élément filtrant selon l'une quelconque des revendications précédentes, **caractérisé en ce que** les baguettes profilées (5) comprennent une rampe d'introduction (13) vers le côté du gaz pur (b).

12. Utilisation d'un élément filtrant (100) selon l'une quelconque des revendications précédentes en tant qu'élément filtrant l'air intérieur pour la filtration de l'air entrant de cabine dans un véhicule, qui est soumis à un chargement élevé en polluants, notamment dans un véhicule utilitaire, un véhicule pour charges lourdes ou un véhicule tout-terrain.
